# FASCICULE DE BREVET EUROPEEN

(11) **EP 1 706 311 B1**
(45) Date de publication et mention de la délivrance du brevet: **26.09.2007**
(21) Numéro de dépôt: 05717365.0
(22) Date de dépôt: 05.01.2005
(51) Int. Cl.: B62K 21/08

(54) **SYSTEME DE DIRECTION AVANT SUSPENDUE POUR CYCLE AVEC ROTATION MULTI TOURS**
GEFEDERTES VORDERLENKSYSTEM FÜR MEHRFACHUMDREHUNGS-ZWEIRÄDER
SUSPENDED FRONT STEERING SYSTEM FOR MULTIPLE ROTATION CYCLES

(30) Priorité: 09.01.2004 FR 0400159
(43) Date de publication de la demande: 04.10.2006
(73) Titulaire: Cauwet, Jerôme, 83270 Saint Cyr sur Mer (FR)
(72) Inventeur: Cauwet, Jerôme, 83270 Saint Cyr sur Mer (FR)
(74) Mandataire: Roman, Michel
(86) Numéro de dépôt international: PCT/FR2005/000017
(87) Numéro de publication internationale: WO 2005/073066

(56) Documents cités:
- EP-A- 0 479 138
- DE-A1- 3 917 839
- US-A- 4 093 262
- US-A- 4 511 156
- US-A- 4 616 523
- US-A- 5 193 832
- US-A- 5 511 811
- US-A- 5 791 671
- US-B1- 6 220 398

## Description

La présente invention a pour objet un système de direction avant suspendue pour cycles avec rotation multi tours.

Elle concerne le domaine technique des éléments de direction d'un véhicule et plus particulièrement des éléments des systèmes de direction avant pour cycles utilisés pour réaliser des figures acrobatiques.

Les systèmes de direction équipant habituellement les cycles comme les vélos ou les motos, sont généralement associés à des amortisseurs pour améliorer le confort du pilote, la maniabilité et le contrôle du véhicule. Ces amortisseurs sont couramment constitués de fourches télescopiques disposées au niveau de la colonne de direction et à l'extrémité desquelles est reliée la roue avant.

Les fourches sont constituées de deux tubes télescopiques agencés de part et d'autre de la colonne de direction, reliés à leur extrémité à l'axe de la roue avant. Généralement munis d'amortisseur à ressort, à gaz ou à huile, ces tubes de fourches sont capables d'amortir les chocs et les vibrations.

Si on fait pivoter le guidon autour de l'axe de direction, les tubes de fourches viennent buter sur le cadre lorsque l'on dépasse un certain angle de rotation.

De plus, lorsque le système de direction pivote, les câbles ou les flexibles hydrauliques de freins viennent s'enrouler autour de la colonne de direction, ce qui est gênant pour la rotation du guidon.

Une rotation complète du guidon autour de l'axe de direction n'est donc pas possible avec ces systèmes classiques.

Il existe pourtant sur certains vélos du type BMX des systèmes permettant une rotation complète du guidon autour de l'axe de direction. Le système de direction est alors constitué par un tube pivotant autour de la colonne de direction et à l'extrémité duquel est fixée la roue avant. Un système dit rotor situé dans le jeu de direction, formant une connexion pivotante des câbles de frein, assure le freinage tout en permettant de faire une rotation du guidon autour de la colonne de direction ou du vélo autour du guidon, sans emmêler les câbles de frein. Ce système est couramment utilisé pour réaliser des figures acrobatiques. Mais dans cette configuration, le système de direction de la roue avant n'est pas pourvu de moyens d'amortissement.

Le brevet N° US 5 791 671 (TANG, VALDEZ) décrit une bicyclette sur laquelle le câble de frein avant passe à l'intérieur du tube pivotant dans la colonne de direction et à l'extrémité inférieure duquel est montée la fourche portant la roue avant.

Ce dispositif, ainsi que les systèmes décrits précédemment ne permettent pas d'associer simultanément une rotation complète du guidon autour de l'axe de direction et un amortissement du système de direction avant d'un cycle.

La présente invention a pour but de pallier cet état des choses notamment du fait qu'elle permet à un pilote d'effectuer des figures acrobatiques avec une rotation complète de 360 du guidon autour de l'axe de direction ou du cycle autour du guidon, tout en garantissant un amortissement et en assurant le freinage de la roue avant.

Un autre but de l'invention est de proposer un nouveau système de direction télescopique pour cycle peu encombrant, ne nécessitant qu'un minimum d'entretien, maniable et assurant une bonne stabilité du véhicule.

Ces buts sont atteints par un système de direction pour cycles à suspension télescopique comportant une fourche portant la roue avant du cycle et fixée à l'extrémité d'un plongeur pivotant dans une colonne de direction fixée au châssis, se caractérisant par le fait qu'une pièce de guidage transmet le mouvement de rotation du guidon au plongeur, et qu'un amortisseur est situé entre une paroi interne du plongeur et la pièce de guidage qui est montée pivotante dans la partie supérieure de la colonne de direction, de sorte que le plongeur puisse coulisser axialement dans ladite colonne de direction.

Le guidage du plongeur et l'amortissement sont ainsi séparés et l'ensemble des moyens de suspension et des moyens de direction est logé dans la colonne de direction pour permettre une rotation de 360 du guidon.

Ces buts sont également atteints par le fait que le flexible du frein passe à l'intérieur du système de direction par une position centrale et que ce système de direction est équipé d'un système rotor pour le passage des câbles d'embrayage et d'accélérateur.

Ces buts sont également atteints par le fait que la colonne de direction est pourvue d'un système de réglage de l'angle de chasse et que le système de fixation de la fourche sur le plongeur permet d'ajuster le déport du cycle.

D'autres caractéristiques et avantages de la présente invention ressortiront mieux à la lecture de la description suivante, faite à titre, indicatif et non limitatif, en regard des dessins annexés, sur lesquels:
- la figure 1 est une vue en coupe selon A-A du dispositif selon l'invention installé sur une moto;
- la figure 2 est une vue en coupe selon B-B du dispositif selon l'invention;
- la figure 3 est une vue en coupe selon C-C de la partie supérieure de la fourche montrant le système de fixation de la fourche sur le plongeur 15 pour le réglage du déport.

En se référant aux figures annexées, le système de direction 1 est constitué par une colonne de direction 2 de forme cylindrique et de diamètre de l'ordre de 160 millimètres.

La colonne de direction peut être en aluminium taillé dans la masse ou en tout autre matériau de caractéristiques équivalentes.

La colonne de direction est ouverte dans sa partie inférieure pour le logement du plongeur 5. Sa partie supérieure est fermée mais permet le logement d'une pièce de guidage 6.

La colonne de direction sert ainsi à former avec le plongeur 5 un fourreau cylindrique dans lequel sont logés la plupart des éléments constitutifs du système de direction objet de l'invention.

La colonne de direction 2 est fixée à l'avant du châssis de la moto 3 30 par l'intermédiaire d'un système de réglage de l'angle de chasse 4. L'axe de la colonne de direction définit l'axe de direction.

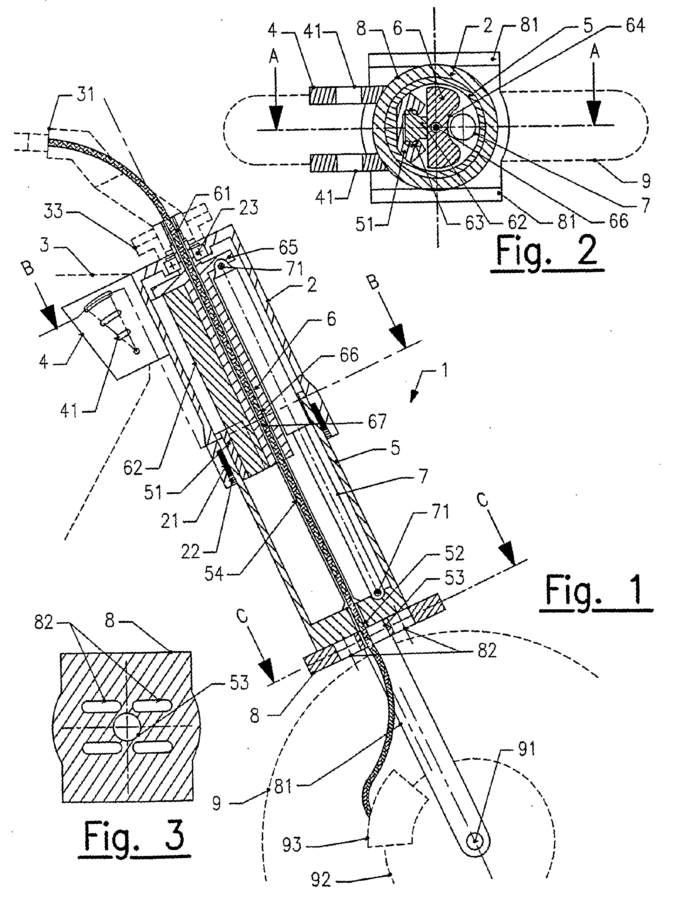

L'angle de chasse est l'angle entre la verticale et l'axe de direction. Ce système de réglage de l'angle de chasse est constitué par deux plaques parallèles sensiblement verticales qui se positionnent dans la partie avant du cadre, chaque plaque étant munie d'une série de trous oblongs 41 de largeur croissante permettant de loger des vis de fixation pour maintenir le système de direction 1 en position, comme représenté sur les figures 1 et 2.

En faisant varier la position des trous oblongs par rapport aux vis, on peut ajuster l'inclinaison de la colonne de direction par rapport à la verticale et donc régler l'angle de chasse.

Le pilote dispose ainsi d'un moyen facile pour régler la géométrie de sa moto selon ses préférences afin de jouer sur la maniabilité et la vivacité de la direction ainsi que sur la stabilité de sa machine.

A l'intérieur de la colonne de direction 2 est monté un plongeur 5. Ce plongeur est de forme tubulaire, préférentiellement en aluminium taillé dans la masse ou en tout autre matériau de caractéristiques équivalentes, coaxial à la colonne de direction et capable de coulisser et de pivoter axialement dans la colonne de direction.

Le diamètre intérieur de la colonne de direction et le diamètre extérieur du plongeur sont sensiblement égaux, de telle sorte qu'ils forment un tube télescopique (figure 1).

Dans un mode préféré de réalisation, la surface extérieure du plongeur est rectifiée et reçoit un traitement de surface pour limiter les frottements et assurer une résistance supérieure à l'usure et aux projections.

Le plongeur est ouvert dans sa partie supérieure et fermé dans sa partie inférieure. La colonne de direction et le plongeur 5 forment ainsi un fourreau cylindrique télescopique dans lequel sont logés la plupart des éléments constitutifs du système de direction objet de l'invention.

Dans la partie inférieure de la colonne de direction 2 sont logés un palier composite 21 et un joint racleur 22.

Le palier composite 21 a pour fonction de réduire les frottements entre le plongeur 5 et la colonne de direction 2 et d'assurer le guidage en rotation du plongeur. De cette manière, le plongeur peut pivoter et coulisser facilement dans la colonne de direction.

Le joint racleur 22, placé sous le palier composite 21, permet de racler les détritus qui se trouvent sur la paroi externe du plongeur 5. La propreté externe du plongeur est ainsi assurée et le risque d'avoir des détritus pouvant détériorer le palier composite est écarté.

Le plongeur 5 est mis en rotation grâce à une pièce de guidage 6, allongée dans le sens de l'axe de direction, préférentiellement en aluminium taillé dans la masse ou en tout autre matériau de caractéristiques équivalentes. Positionnée dans la partie supérieure de la colonne de direction 2, elle est montée pivotante par rapport à l'axe de direction par l'intermédiaire de roulements 23 servant à réduire les frottements et servant au guidage en rotation.

Le guidon 31 de la moto 3 vient se fixer sur la partie 61 de la pièce de guidage 6 qui dépasse de la colonne de direction 2, comme représenté sur la figure 1. Le pilote, en tournant le guidon va donc mettre en rotation la pièce de guidage 6.

La pièce de guidage 6 reçoit sur sa paroi extérieure un rail de guidage linéaire 62, parallèle à l'axe de direction. Un chariot 51 de forme complémentaire, situé sur la paroi interne du plongeur 5, vient se loger dans ce rail de guidage (figure 2).

Ce rail de guidage est rectifié avec un traitement de surface et comporte des chemins de roulement 63 pour réduire les frottements avec le chariot 51. Le chariot 51 peut également être rectifié et traité.

Le rail de guidage 62 a pour fonction de guider en translation le plongeur 5 et de transmettre le couple de rotation au plongeur. De cette manière, le plongeur tourne en même temps que le guidon de la moto et peut coulisser facilement dans la colonne de direction.

La pièce de guidage 6 permet de séparer les moyens de guidage en rotation et en translation du plongeur des moyens d'amortissement.

Le positionnement et la configuration de la pièce de guidage 6 permettent de former un espace entre la paroi intérieure du plongeur 5 et la paroi extérieure de la pièce de guidage afin de loger l'amortisseur 7. Dans le mode de réalisation représenté sur les figures 1 et 2, la pièce de guidage 6 présente sur sa paroi extérieure, à l'opposé du rail de guidage 62, une concavité 64 qui forme avec la paroi interne du plongeur 5 un logement pour l'amortisseur 7.

L'amortisseur 7 peut être du type classique à ressort, à gaz ou hydraulique ou être conçu spécifiquement pour une application particulière. L'amortisseur étant indépendant des moyens de guidage et des moyens de mise en rotation du plongeur, sa conception ne dépend pas de la géométrie de ces pièces. Le pilote peut donc utiliser des amortisseurs du commerce ou des amortisseurs spécifiques selon l'usage qu'il fait de sa moto (course, tout terrain, figures acrobatiques,...) sans avoir à modifier la conception des autres pièces constitutives de l'invention.

La pièce de guidage 6 présente dans sa partie supérieure un épaulement 65 sur lequel vient se fixer l'extrémité de l'amortisseur 7, l'autre extrémité étant fixée sur le fond du plongeur 5 comme représenté sur la figure 1. L'amortisseur est fixé au niveau du plongeur et de la pièce de guidage par l'intermédiaire de liaisons rotules 71 permettant de compenser les déformations, les jeux ou le non-parallélisme de l'axe de l'amortisseur 7 et de l'axe de translation du plongeur 5.

A l'extrémité inférieure du plongeur 5 est fixée une fourche 8 permettant de transmettre le mouvement de rotation du plongeur 5 à la roue avant 9 de la moto. Elle est préférentiellement en aluminium mécano-soudé ou tout autre matériau de caractéristiques équivalentes.

La fourche 8 possède deux bras 81 reliés à la roue avant 9 de la moto (figure 1). L'extrémité inférieure de ces deux bras est usinée pour recevoir l'axe 91 de roue avant et la fixation du cylindre de frein avant 92.

Comme représenté sur les figures 1 et 3, la partie supérieure de la fourche 8 est fixée au plongeur 5 avec un moyen de réglage du déport constitué par des trous oblongs 82 allongés vers l'avant du cycle, permettant de loger des vis de fixation pour maintenir la fourche 8 en position sur le plongeur 5.

En faisant varier la position radiale de la fourche 5, on peut ajuster la distance entre l'axe de la fourche et l'axe de direction afin de diminuer l'effort nécessaire au pilote pour tourner le guidon et afin d'augmenter la stabilité de la moto.

Le pilote peut ainsi régler facilement la géométrie de sa moto selon ses préférences pour jouer sur la maniabilité et la stabilité de sa machine.

Dans la partie centrale de la pièce de guidage 6 est usiné un logement 66 dans lequel coulisse le flexible de frein avant 67. Ce logement permet de positionner le flexible de frein au niveau de l'axe de direction.

Dans la partie centrale du plongeur 5 est positionné un tube 54 assurant la tenue du flexible hydraulique de frein avant de telle manière qu'il soit guidé sur tout le débattement du plongeur (figure 1). Ce tube 54 est agencé de façon à ce qu'il puisse coulisser à l'intérieur du logement 66 de la pièce de guidage 6 pour éviter que le flexible ne se coince.

De même, des logements 52 et 53 sont prévus respectivement à l'extrémité inférieure du plongeur 5 et dans la partie supérieure de la fourche 8, pour laisser passer le flexible de frein 67 jusqu'au dispositif de freinage avant 93. De cette manière le flexible de frein avant ne s'emmêle pas autour de la colonne de direction lors de la rotation complète du guidon autour de l'axe de direction.

On trouve généralement au niveau des poignées des guidons de motos les commandes de gaz et de frein pour la roue avant et d'embrayage.

Pour que le câble d'embrayage et le câble de commande des gaz ne s'emmêlent pas autour du guidon lors de la rotation du système de direction autour de l'axe de direction, une connexion pivotante du câble ou système rotor 33 est prévue au niveau de la colonne de direction et du guidon. Ce système rotor fréquemment utilisé sur les vélos du type BMX, n'est pas détaillé sur les dessins annexés par souci de clarté.

Ce système est composé de deux coupelles concentriques, la coupelle supérieure fixée au guidon pouvant pivoter par rapport à la coupelle inférieure fixée au niveau de la colonne de direction. Ces deux coupelles ont également la particularité d'être montées coulissantes de telle manière que lorsque la coupelle supérieure est tirée vers le haut, elle entraîne la coupelle inférieure.

La présence des logements 52 et 66 et du système rotor 33 empêche donc les câbles d'embrayage et de gaz de s'emmêler autour de la colonne de direction lors de la rotation du système de direction.

Quand le cycle roule, les chocs sur la roue 9 dus aux bosses ou aux irrégularités sur la route sont transmis par la fourche 8 au plongeur 5, cé dernier se déplaçant téléscopiquement dans la colonne de direction 2 grâce notamment à la pièce de guidage 6 et étant amorti grâce à l'amortisseur 7.

La présence et le positionnement des divers éléments constitutifs donnent à l'objet de l'invention un maximum d'effets utiles qui n'avaient pas été, à ce jour, obtenus par des dispositifs similaires.

## Revendications

1. Système de direction pour cycles à suspension télescopique comportant une fourche (8) portant la roue avant (9) du cycle et fixée à l'extrémité d'un plongeur (5) pivotant autour de l'axe d'une colonne de direction (2) fixée au châssis (3) et comportant une pièce de guidage (6) qui transmet le mouvement de rotation d'un guidon (31) au plongeur (5),
**caractérisé par le fait qu'**un amortisseur (7) est situé entre une paroi interne dudit plongeur et ladite pièce de guidage (6) qui est montée pivotante dans la partie supérieure de la colonne de direction (2), de sorte que le plongeur (5) puisse coulisser axialement dans ladite colonne de direction.

2. Système de direction pour cycles selon la revendication 1, **se caractérisant par le fait qu'**un rail de guidage linéaire (62) est fixé sur la pièce de guidage (6) et qu'un chariot (51) de forme complémentaire est situé sur la paroi interne du plongeur (5).

3. Système de direction pour cycles selon l'une des revendications précédentes, **se caractérisant par le fait que** la pièce de guidage (6) présente sur sa paroi extérieure une concavité (64) servant à former avec la paroi interne du plongeur (5) un logement pour l'amortisseur (7).

4. Système de direction pour cycles selon l'une des revendications précédentes, **se caractérisant par le fait que** le diamètre intérieur de la colonne de direction (2) et le diamètre extérieur du plongeur (5) sont sensiblement égaux.

5. Système de direction pour cycles selon l'une des revendications précédentes, **se caractérisant par le fait que** le flexible du frein avant (67) passe à l'intérieur du système de direction par une position centrale.

6. Système de direction pour cycles selon l'une des revendications précédentes, **se caractérisant par le fait que** les câbles d'embrayage et de gaz sont équipés d'un système rotor.

7. Système de direction pour cycles selon l'une des revendications précédentes, **se caractérisant par le fait que** la colonne de direction (2) est positionnée sur la partie avant du châssis (3) dudit cycle au moyen de deux plaques (4) munies d'une série de trous oblongs (41).

8. Système de direction pour cycles selon l'une des revendications précédentes, **se caractérisant par le fait que** la fourche (8) est fixée au plongeur (5) par l'intermédiaire d'un moyen de réglage du déport constitué par des trous oblongs (83).

## Claims

1. Steering system for cycles with telescopic suspension comprising a fork (8) receiving the front wheel (9) of the cycle and fixed at the end of a plunger (5) swivelling around the axis of a steering column (2) fixed to the end of frame (3) and including a guide part (6) which transmits the rotational movement of handlebar (31) to plunger (5)
**characterised in that** shock absorber (7) is positioned between an inner wall of the plunger and the guide part (6) which is assembled so as to swivel in the upper part of steering column (2), so that plunger (5) slides axially in the aforementioned steering column.

2. Steering system for cycles according to claim 1, **characterised in that** a linear guide rail (62) is fastened on guide part (6) and that a carriage (51) with complementary shape is placed on the inner wall of plunger (5).

3. Steering system for cycles according to one of the preceding claims,
**characterised in that** guide part (6) has a concavity (64) on its outer wall which forms, with the inner wall of plunger (5), a housing receiving shock absorber (7).

4. Steering system for cycles according to one of the preceding claims,
**characterised in that** the inner diameter of steering column (2) and the outer diameter of plunger (5) are roughly equal.

5. Steering system for cycles according to one of the preceding claims,
**characterised in that** front brake hose (67) passes in a central position inside the steering system.

6. Steering system for cycles according to one of the preceding claims,
**characterised in that** the clutch and gas cables are equipped with a rotor system.

7. Steering system for cycles according to one of the preceding claims,
**characterised in that** steering column (2) is positioned on the front part of frame (3) of the aforesaid cycle by means of two plates (4) equipped with a series of oblong holes (41).

8. Steering system for cycles according to one of the preceding claims,
**characterised in that** fork (8) is fixed to plunger (5) using means for adjusting the offset consisting of oblong holes (83).

## Patentansprüche

1. Lenkungssystem für Zwei- und Dreiräder mit Teleskopfederung, bestehend aus einer, mit dem Ende eines Tauchrohrs (5) verbunden Gabel (8), an der das Vorderrad (9) des Zwei- oder Dreirades befestigt, das um die Achse einer am Rahmen (3) befestigten Lenksäule (2) schwenkbar angeordnet ist und ein Lenkungsteil (6), das die Drehbewegung einer Lenkstange (31) an das Tauchrohr (5) überträgt, besitzt:
**gekennzeichnet dadurch, dass** ein Stossdämpfer (7) zwischen einer Innenwand des genannten Tauchrohrs und dem genannten, im oberen Teil der Lenksäule (2) schwenkbaren Lenkungsteil (6) angeordnet ist, so dass das Tauchrohr (5) axial in der genannten Lenkungssäule verschiebbar ist.

2. Lenkungssystem für Zwei- und Dreiräder gemäss Patentanspruch 1, **gekennzeichnet dadurch, dass** eine lineare Führungsschiene (62) am Lenkungsteil (6) befestigt ist, und dass ein Schlitten (51) mit entsprechend komplementärer Form an der Innenwand des Tauchrohrs (5) angeordnet ist.

3. Lenkungssystem für Zwei- und Dreiräder gemäss einem der obenstehenden Ansprüche, **gekennzeichnet dadurch, dass** das Lenkungsteil (6) an seiner Außenwand eine Ausnehmung (64) besitzt, mit dem Zweck, mit der Innenwand des Tauchrohrs (5) eine Aufnahme für den Stossdämpfer (7) zu bilden.

4. Lenkungssystem für Zwei- und Dreiräder gemäss einem der obenstehenden Ansprüche, **gekennzeichnet dadurch, dass** der Innendurchmesser der Lenkungssäule (2) und der Außendurchmesser des Tauchrohrs (5) in etwa gleich sind.

5. Lenkungssystem für Zwei- und Dreiräder gemäss einem der vorstehenden Ansprüche, **gekennzeichnet dadurch, dass** das Kabel der Vorderradbremse (67) innen durch das Lenkungssystem, in zentraler Lage, geführt wird.

6. Lenkungssystem für Zwei- und Dreiräder gemäss einem der vorstehenden Ansprüche, **gekennzeichnet dadurch, dass** die Kupplungs- und Gaskabel mit einer Drehkupplung versehen sind.

7. Lenkungssystem für Zwei- und Dreiräder gemäss einem der vorstehenden Ansprüche, **gekennzeichnet dadurch, dass** die Lenksäule (2) am vorderen Teil des Rahmens (3) des genannten Zwei- oder Dreirades mit zwei Platten (4) befestigt ist, die mit einer Reihe von Langlöchern (41) versehen sind.

8. Lenkungssystem für Zwei- und Dreiräder gemäss einem der vorstehenden Ansprüche, **gekennzeichnet dadurch, dass** die Gabel (8) am Tauchrohr (5) mit Hilfe einer Stellvorrichtung für den durch die Langlöcher (83) gebildeten Überstand befestigt ist.
